# EUROPÄISCHE PATENTSCHRIFT

(11) **EP 3 766 840 B1**
(45) Veröffentlichungstag und Bekanntmachung des Hinweises auf die Patenterteilung: **20.11.2024**
(21) Anmeldenummer: 19186858.7
(22) Anmeldetag: 17.07.2019
(51) Int. Cl.: C03B 23/047, C03B 37/012, C03B 37/027

(54) **VERFAHREN ZUR HERSTELLUNG EINER HOHLKERNFASER UND ZUR HERSTELLUNG EINER VORFORM FÜR EINE HOHLKERNFASER**
METHOD FOR PRODUCING A HOLLOW CORE FIBRE AND FOR PRODUCING A PREFORM FOR A HOLLOW CORE FIBRE
PROCÉDÉ DE FABRICATION D'UNE FIBRE À COEUR CREUX ET DE FABRICATION D'UNE PRÉFORME DE FIBRE À COEUR CREUX

(43) Veröffentlichungstag der Anmeldung: 20.01.2021
(73) Patentinhaber: Heraeus Quarzglas GmbH & Co. KG, 63450 Hanau (DE)
(72) Erfinder: ROSENBERGER, Manuel, 63450 Hanau (DE); HÜNERMANN, Michael, 63450 Hanau (DE); TROMMER, Martin, 63450 Hanau (DE); SCHUSTER, Kay, 63450 Hanau (DE); WEIMANN, Steffen, 63450 Hanau (DE); GANZ, Oliver, 63450 Hanau (DE)
(74) Vertreter: Staudt, Armin Walter

(56) Entgegenhaltungen:
- WO-A1-2018/169487
- DE-B3- 102005 028 219
- A F KOSOLAPOV ET AL: "Hollow-core revolver fibre with a double-capillary reflective cladding", QUANTUM ELECTRONICS., vol. 46, no. 3, 29 March 2016 (2016-03-29), GB, pages 267 - 270, XP055502520, ISSN: 1063-7818, DOI: 10.1070/QEL15972

## Beschreibung

### Technischer Hintergrund

Die Erfindung betrifft ein Verfahren zur Herstellung einer Antiresonanten Hohlkernfaser, die einen sich entlang einer Faser-Längsachse erstreckenden Hohlkern und einen den Hohlkern umgebenden Mantelbereich, der eine Anzahl von Antiresonanzelementen umfasst, mit den Verfahrensschritten:
(a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
(b) Bereitstellen von rohrförmigen Antiresonanzelement-Vorformlingen, die jeweils mindestens ein ARE-Außenrohr und optional mindestens ein ARE-Innenrohr aufweisen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist, und
(d) Elongieren der primären Vorform zu der Hohlkernfaser oder Weiterverarbeitung der primären Vorform zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Außerdem betrifft die Erfindung ein Verfahren zur Herstellung einer Vorform für eine Antiresonante Hohlkernfaser, die einen sich entlang einer Faser-Längsachse erstreckenden Hohlkern und den Hohlkern umgebenden Mantelbereich aufweist, der mehrere Antiresonanzelemente umfasst, mit den Verfahrensschritten:
(a) Bereitstellen eines Hüllrohres mit einer Hüllrohr-Längsachse, entlang der sich eine von einer Innenseite und einer Außenseite begrenzte Hüllrohr-Wandung erstreckt,
(b) Bereitstellen von rohrförmigen Antiresonanzelement-Vorformlingen, die jeweils mindestens ein ARE-Außenrohr und optional mindestens ein ARE-Innenrohr aufweisen,
(c) Anordnen der Antiresonanzelement-Vorformlinge an Soll-Positionen der Innenseite der Hüllrohr-Wandung unter Bildung einer primären Vorform, die einen hohlen Kernbereich und einen inneren Mantelbereich aufweist, und
(d) Optionale Weiterverarbeitung der primären Vorform zu einer sekundären Vorform für die Hohlkernfaser, wobei die Weiterverarbeitung eine einmalige oder wiederholte Durchführung von einem oder mehreren der folgenden Heißformprozesse umfasst:
   (i) Elongieren,
   (ii) Kollabieren,
   (iii) Kollabieren und gleichzeitiges Elongieren,
   (iv) Aufkollabieren von zusätzlichem Mantelmaterial,
   (v) Aufkollabieren von zusätzlichem Mantelmaterial und anschließendes Elongieren,
   (vi) Aufkollabieren von zusätzlichem Mantelmaterial und gleichzeitiges Elongieren.

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur der Hohlkanäle im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante Hohlkernfaser" ("antiresonant hollow-core fibers"; AR-HCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

### Stand der Technik

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-and-draw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für antiresonante Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

A. F. Kosolapov et al.: "Hollow-core revolver fibre with a doublecapillary reflective cladding", Quantum Electronics, Vol. 46., No. 3, 29. March 2016 (2016-03-29), Pages 267-270, DOI: 10.1070/QEL15972, beschreibt ein Verfahren zur Herstellung einer Antiresonanten Hohlkernfaser durch Bereitstellen eines Hüllrohres und einer Anzahl von Antiresonanzelement-Vorformlingen, die als Doppelrohr aus ARE-Außenrohr und einem an dessen Innenwandung angeschweißtem ARE-Innenrohr zusammengesetzt sind. Zum Elongieren des Doppelrohres wird ein Standard-Ziehofen eingesetzt.

DE 10 2005 028219 B3 beschreibt ein Verfahren zur Herstellung eines Rohres aus Quarzglas durch Elongieren eines Quarzglas-Hohlzylinders in einem VertikalZiehverfahren. Der Quarzglas-Hohlzylinder wird dabei kontinuierlich einer Heizzone mit vertikal ausgerichtetem Heizrohr zugeführt, darin zonenweise erweicht und aus dem erweichten Bereich wird ein Rohrstrang abgezogen und zu dem Quarzglasrohr abgelängt. Um die Maßhaltigkeit des erhaltenen Quarzglasrohres zu optimieren, wird vorgeschlagen, dass das Verhältnis von Heizzonen-Länge und Heizzonen-Innendurchmesser kleiner als 0,9 ist.

### Technische Aufgabenstellung

Antiresonante Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanzbeziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nichtmaßstäbliche Verformungen beim Faserziehprozess auftreten.

Bei der bekannten "Stack-and-Draw"-Technik sind viele Elemente positionsgenau zusammenzufügen. Beispielsweise müssen zur Herstellung der aus dem eingangs genannten Paper bekannten Hohlkernfaser im "NANF"-Design sechs Antiresonanzelement-Vorformlinge, jeweils bestehend aus einem Antiresonanzelement-Außenrohr (kurz: ARE-Außenrohr) und einseitig an der ARE-Außenrohr-Innenmantelfläche eingeschweißtem Antiresonanzelement-Innenrohr (kurz: ARE-Innenrohr), an der Innenseite eines Hüllrohrs angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack-and-Draw"-Technik nicht ohne Weiteres zu realisieren. Ziel der Erfindung ist, ein Verfahren zur kostengünstigen Herstellung einer Antiresonanten Hohlkernfaser anzugeben, das Beschränkungen herkömmlicher Herstellungsverfahren vermeidet.

Insbesondere ist es Ziel der Erfindung, ein Verfahren zur Herstellung einer Antiresonanten Hohlkernfaser und einer Vorform für Antiresonante Hohlkernfasern bereitzustellen, mit dem reproduzierbar eine hohe Präzision der Strukturelemente und eine exakte Positionierung der Antiresonanzelemente in der Faser in einer ausreichend stabilen und reproduzierbaren Weise erreicht werden kann.

Außerdem sollen Nachteile der klassischen "Stack and Draw"-Technik, mit der die erforderlichen Strukturgenauigkeiten, insbesondere eine gleichmäßige Wandstärke der Antiresonanzelemente und eine exakte Positionierung an vorgegebenen azimutalen Positionen nicht einfach zu erreichen ist, möglichst vermieden werden.

### Zusammenfassung der Erfindung

Hinsichtlich des Verfahrens zur Herstellung der Antiresonanten Hohlkernfaser wird diese Aufgabe ausgehend von einem Verfahren der eingangs genannten Gattung erfindungsgemäß dadurch gelöst, dass zum Bereitstellen der rohrförmigen Antiresonanzelement-Vorformlinge gemäß Verfahrensschritt (b) das das ARE-Außenrohr und/oder das ARE-Innenrohr anhand eines Vertikalziehverfahrens ohne Formwerkzeug erzeugt wird, das folgende Verfahrensschritte umfasst:
(aa) Bereitstellen eines Ausgangshohlzylinders aus Glas, der eine ZylinderLängsachse und eine äußere Zylindermantelfläche sowie eine innere Zylindermantelfläche aufweist,
(bb) einen ersten Elongierprozess, bei dem der Ausgangshohlzylinder mit vertikal orientierter Längsachse kontinuierlich einer ersten Heizzone mit einer ersten Heizzonenlänge L_{H1} zugeführt, darin bereichsweise erweicht und aus dem erweichten Bereich ein Zwischenzylinder ohne Formwerkzeug abgezogen wird,
(cc) einen zweiten Elongierprozess, bei dem der Zwischenzylinder oder ein aus dem Zwischenzylinder durch Elongieren erhaltener elongierter Zwischenzylinder mit vertikal orientierter Längsachse kontinuierlich einer zweiten Heizzone mit einer zweiten Heizzonenlänge L_{H2} zugeführt, darin bereichsweise erweicht und aus dem erweichten Bereich ein Rohrstrang mit einem Außendurchmesser Tₐ und einem Innendurchmesser Tᵢ ohne Formwerkzeug abgezogen wird, wobei gilt: L_{H2} < L_{H1} und Tₐ/Tᵢ < 1,5, und
(dd) Ablängen des Rohrstrangs zu ARE-Außenrohren beziehungsweise zu ARE-Innenrohren,
wobei als Heizzonenlänge derjenige Längenabschnitt verstanden wird, innerhalb dem die in Grad Celsius gemessene Temperatur mindestens 90% einer maximalen Ziehtemperatur beträgt.

Ausgangspunkt für die Herstellung der Antiresonanten Hohlkernfaser ist eine Vorform, die hier auch als "primäre Vorform" bezeichnet wird. Die Herstellung der primären Vorform umfasst den Einbau und das Verbinden von Antiresonanzelement-Vorformlingen mit einem Hüllrohr unter Bildung eines sogenannten "Canes". Die primäre Vorform kann zu der Hohlkernfaser elongiert werden; in der Regel wird der primären Vorform aber zusätzliches Mantelmaterial hinzugefügt, um daraus eine hier als "sekundäre Vorform" bezeichnete Vorform zu erzeugen. Gegebenenfalls wird die Hohlkernfaser durch Elongieren der sekundären Vorform erzeugt. Alternativ werden die primäre Vorform oder die sekundäre Vorform unter Ausbildung eines koaxialen Ensembles von Bauteilen mit einem Überfangzylinder oder mit mehreren Überfangzylindern umgeben und das koaxiale Ensemble direkt zu der Hohlkernfaser elongiert. Der allgemeine Begriff "Vorform" wird hier zur Bezeichnung desjenigen Bauteils oder desjenigen koaxialen Ensembles von Bauteilen verstanden, aus der die Hohlkernfaser letztlich gezogen wird.

Die Herstellung der Vorform umfasst eine Anzahl von Verfahrensschritten, bei denen Ausgangselemente der Hohlkernfaser hergestellt und zueinander positioniert werden und mindestens einen Heißverformungsschritt. Jedes der Ausgangselemente und weist eine gewisse Abweichung von seiner Sollgeometrie auf und jeder Schritt der Positionierung und Umformung führt zwangsläufig zu Geometrieabweichungen, die sich in der fertigen Vorform zu einem absoluten Geometriefehler aufsummieren. Insbesondere die Heißumformung von Glas kann bei geringsten Abweichungen von einem idealen in der Regel zylindersymmetrischen Temperaturprofil der Heizzone zu einer ungewollten und nicht reproduzierbaren Verformung führen.

Die beim erfindungsgemäßen Verfahren eingesetzte primäre Vorform enthält Antiresonanzelemente, von denen mindestens einige, vorzugsweise alle in einem Vertikalziehverfahren ohne Formwerkzeug erzeugt werden.
- Unter einem Formwerkzeug wird hier beispielsweise eine Formdüse, ein Formdorn oder ein anderes Glasbläserwerkzeug verstanden, das beim Umformprozess zwecks Formgebung in direkten Kontakt mit der heißen Glasmasse gebracht wird. Derartige Formwerkzeuge bestehen aus einem hochtemperaturfesten Werkstoff, wie beispielsweise aus Wolfram, und sie bewirken häufig Verunreinigungen im Glas. Außerdem können sie durch den Kontakt mit der heißen Glasmasse zu Beschädigungen der Oberfläche des abgezogenen Glasstrangs führen.
   Da es sich beim erfindungsgemäßen Verfahren um ein berührungsloses Formgebungsverfahren, das heißt: ohne Einsatz von Formwerkzeugen, handelt, werden alle diese Nachteile vermieden. Es werden ARE-Außenrohre beziehungsweise ARE-Innenrohre erhalten, die sich durch hohe Reinheit und schädigungsarme Oberfläche auszeichnen. Insbesondere wird ein ARE-Außenrohr beziehungsweise ein ARE-Innenrohr aus Quarzglas erhalten, das eine Wolfram-Konzentration von weniger als 2 Gew.-ppb enthält.
- Bei bekannten Methoden zum Elongieren eines Ausgangszylinders erfolgt das Umformen in einer Heizzone bei horizontal orientierter Ausgangszylinder-Längsachse. Derartige Horizontalziehverfahren werden insbesondere zum Elongieren langer Rohre eingesetzt. Dabei können in der Heizzone gebildete Partikel, beispielsweise aus Metall, Graphit oder SiC, durch die Schwerkraft leicht auf die heiße Glasmasse gelangen. Derartige Partikel führen zu einer Verschlechterung sowohl der optischen Eigenschaften (Absorption, Brechzahl) als auch der mechanischen Eigenschaften (Blasen oder Partikel) und führen beim Faserziehprozess in der Regel zum Faserbruch.

Beim erfindungsgemäßen Vertikalziehverfahren tritt dieser Effekt nicht auf, da die in der Heizzone gebildeten Partikel infolge der Schwerkraft seitlich zum elongierten Rohrstrang herabfallen. Es werden ARE-Außenrohre beziehungsweise ARE-Innenrohre erhalten, die sich durch hohe Partikelfreiheit auszeichnen.

Insbesondere wird nach Beendigung des Vertikalziehverfahrens ein ARE-Außenrohr beziehungsweise ein ARE-Innenrohr mit einer Außenmantelfläche erhalten, die frei ist von Partikeln mit einer Größe von mehr als 0,005 mm.

Insgesamt können so ARE-Außenrohre und ARE-Innenrohre mit einer höheren Bruchfestigkeit (durch geringe Partikelkontamination) und einer verbesserten geometrischen Genauigkeit realisiert werden, was auch in verbesserten Dämpfungseigenschaften und Bandbreitenperformance beiträgt. Die Fertigung der Bauteile kann mit einer Maßabweichung von weniger als 0,1 mm in der Wandstärke erfolgen.

Das Vertikalziehverfahren umfasst folgende Verfahrensschritte:
(aa) Bereitstellen eines Ausgangshohlzylinders aus Glas, der eine ZylinderLängsachse und eine äußere Zylindermantelfläche sowie eine innere Zylindermantelfläche aufweist,
(bb) einen ersten Elongierprozess, bei dem der Ausgangshohlzylinder mit vertikal orientierter Längsachse kontinuierlich einer ersten Heizzone mit einer ersten Heizzonenlänge L_{H1} zugeführt, darin bereichsweise erweicht und aus dem erweichten Bereich ein Zwischenzylinder ohne Formwerkzeug abgezogen wird,
(cc) einen zweiten Elongierprozess, bei dem der Zwischenzylinder oder ein aus dem Zwischenzylinder durch Elongieren erhaltener elongierter Zwischenzylinder mit vertikal orientierter Längsachse kontinuierlich einer zweiten Heizzone mit einer zweiten Heizzonenlänge L_{H2} zugeführt, darin bereichsweise erweicht und aus dem erweichten Bereich ein Rohrstrang mit einem Außendurchmesser Tₐ und einem Innendurchmesser Ti ohne Formwerkzeug abgezogen wird, wobei gilt: L_{H2} < L_{H1} und Tₐ/Tᵢ < 1,5, und
(dd) Ablängen des Rohrstrangs zu ARE-Außenrohren beziehungsweise zu ARE-Innenrohren.

Der Elongierprozess verläuft hierbei in mindestens zwei Stufen und in mindestens zwei unterschiedlichen Ziehanlagen. Die dabei zum Einsatz kommenden Ziehanlagen unterscheiden sich insbesondere in der Länge ihrer Heizzone. Darunter wird bei einer Heizzone mit einem in vertikaler Richtung konstanten Temperaturprofil diejenige beheizte Länge verstanden, innerhalb der die Temperatur ihren nominalen Sollwert hat. Bei einer Heizzone mit einem in vertikaler Richtung nicht konstanten Temperaturprofil wird derjenige Längenabschnitt verstanden, innerhalb dem die in Grad Celsius gemessene Temperatur mindestens 90% der maximalen Ziehtemperatur beträgt.
- Die vergleichsweise längere Heizzone im ersten Elongierschritt trägt zu einer homogeneren radialen Temperaturverteilung im Volumen des umzuformenden Ausgangszylinders bei und ermöglicht einen großen Materialdurchsatz. Die erste Heizzonenlänge L_{H1} beträgt mindestens 200 mm, und liegt vorzugsweise zwischen 250 und 400 mm.
- Die vergleichsweise kürzere Heizzone im zweiten Elongierschritt bewirkt einen steileren Temperaturgradienten in axialer Richtung des umzuformenden Zwischenzylinders. Dies resultiert in einer relativ kurzen Ziehzwiebel mit einer geringen Ziehzwiebelmasse. Infolge der geringeren erweichten Masse werden wiederum deren Eigenschwingungen reduziert, mit dem Ergebnis geringerer Maßabweichungen beim abgezogenen Rohrstrang. Die zweite, kürzere Heizzonenlänge L_{H2} beträgt maximal 180 mm, und sie liegt vorzugsweise zwischen 50 und 150 mm.

Bei einer besonders vorteilhaften Variante des zweistufigen Elongierverfahrens umfasst das Bereitstellen des Ausgangshohlzylinders gemäß Verfahrensschritt (aa) eine mechanische Bearbeitung der Zylindermantelflächen zur Einstellung von Ausgangshohlzylinder-Endmaßen, umfassend einen Außendurchmesser Cₐ von mindestens 90 mm, einen Innendurchmesser Ci und ein Durchmesserverhältnis Cₐ/Cᵢ von weniger als 2,8.

Die mechanische Bearbeitung der Zylindermantelflächen des Ausgangshohlzylinders erfolgt vorzugsweise durch spanende Bearbeitung mittels Schneiden, Bohren, Fräsen, Schleifen, Honen und/oder Polieren.

Diese Bearbeitungstechniken liefern im Vergleich zu anderen bekannten Umformtechniken zur Hohlzylinder-Fertigung unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Als Ausgangszylinder wird ein vergleichsweise großer Hohlzylinder mit einem Außendurchmesser Cₐ von mindestens 90 mm, bevorzugt mindestens150 mm, und besonders bevorzugt mindestens 180 mm, eingesetzt. Das Durchmesserverhältnis Cₐ/Cᵢ ist ein Maß für die Wandstärke des Ausgangszylinders.

Dieser wird über den Zwischenschritt des mindestens einen Zwischenzylinders vorteilhaft zu einem Rohrstrang mit einem Außendurchmesser Tₐ im Bereich von 7 bis 25 mm gezogen.

Bei einer ersten Verfahrensvariante wird die Wandstärke des Rohrstrangs vorzugsweise auf einen Wert zwischen 0,2 und 2 mm, bevorzugt auf einen Wert zwischen 0,22 und 1,2 mm, eingestellt, und das Durchmesserverhältnis Tₐ/Tᵢ auf einen Wert im Bereich von 1,02 und 1,14, vorzugsweise auf einen Wert im Bereich von 1,04 bis 1,08.

Bei einer zweiten Verfahrensvariante wird die Wandstärke des Rohrstrangs vorzugsweise auf einen Wert zwischen 0,2 und 2 mm, bevorzugt auf einen Wert zwischen 0,22 und 1,2 mm, eingestellt, und das Durchmesserverhältnis Tₐ/Tᵢ auf einen Wert im Bereich von 1,02 und 1,14, vorzugsweise auf einen Wert im Bereich von 1,04 bis 1,08.

Insbesondere im Hinblick auf eine möglichst glatte Innenoberfläche des abgezogenen Rohrstrangs hat sich als vorteilhaft erwiesen, wenn das Ausziehverhältnis in Summe der Elongierprozesse auf einen Wert im Bereich von 38 bis 7800 eingestellt wird.

Als Ausziehverhältnis wird hier das Verhältnis der Gesamtquerschnittsflächen von abgezogenem Rohrstrang und Ausgangszylinder verstanden. Es ist ein Maß für die Intensität / den Grad des Umformprozesses. Durch Einsatz eines großen Ausgangszylinders ist auch eine höhere Fertigungsproduktivität erreichbar.

Es hat sich gezeigt, dass die Qualität der Innenwandung des abgezogenen Rohrstrangs von der Intensität des Umformprozesses abhängt. Ein intensiver Umformprozess führt tendenziell zu einer besseren, glatteren Innenoberfläche.

Das berührungslose Vertikalziehverfahren kann auch vorteilhaft zur Herstellung des Hüllrohres der primären Vorform eingesetzt werden. Das Hüllrohr zeichnet sich dabei vorzugsweise durch einen Durchmesser im Bereich von 20 bis 70 mm aus, bevorzugt durch einen Außendurchmesser im Bereich von 30 bis 60 mm. Hierbei handelt es sich um einen vergleichsweise großen Außendurchmesser. Im Stand der Technik liegen die Außendurchmesser der primären Vorformen (Canes) typischerweise bei 4 bis 6 mm. Damit ist die Herstellung von Hohlkernfasern im industriellen Maßstab kaum möglich.

Da mit zunehmendem Durchmesser der Vorform die vorhandene absolute Geometriefehler beim Faserziehen stärker herunterskaliert werden, wird so eine präzisere Fertigung der Hohlkernfaser grundsätzlich ermöglicht. Je größer der Durchmesser ist, umso langsamer ist die Nachführgeschwindigkeit beim Elongieren und umso länger ist die Dauer, der jedes axiale Teilstück der Vorform der hohen Temperatur der Heizzone ausgesetzt ist. Bei zu langsamer Nachführgeschwindigkeit beim Elongieren deformieren jedoch die Strukturelemente der Antiresonanzelement-Vorformlinge. Bei kleineren Durchmessern als 20 mm ist die thermische Trägheit der Vorform gering, so dass etwaige Temperaturschwankungen in der Heizzone schwieriger auszugleichen.

Bei einer bevorzugten Verfahrensvariante umfasst das Anordnen der Antiresonanzelement-Vorformlinge und/oder das Elongieren der primären Vorform, und/oder das Ziehen der Hohlkernfaser eine Fixierungs-Maßnahme und/oder eine Versiegelungsmaßnahme unter Einsatz einer amorphe SiO₂-Partikel enthaltenden Versiegelungs- oder Verbindungsmasse.

Die zum Versiegeln oder Fixieren eingesetzte Versiegelungs- oder Verbindungsmasse enthält amorphe SiO₂-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO₂-haltige Versiegelungs- oder Verbindungsmasse genügt den Anforderungen zur Fixierung und Verdichtung. Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die Versiegelungs- und Verbindungsmasse ist auch vorteilhaft einsetzbar, um beim Elongieren der primären Vorform und/oder beim Ziehen der Hohlkernfaser offene Enden der Antiresonanzelement-Vorformlinge und/oder einzelne Strukturelemente der Antiresonanzelement-Vorformlinge und/oder einen etwaigen Ringspalt zwischen Rohrelementen zu verschleißen.

Auf diese Weise können die einzelnen Bestandteile der primären Vorform und/oder sekundären Vorform beim Elongieren beziehungsweise beim Faserziehprozess unterschiedlichen Innendrücken ausgesetzt werden.

Die Exaktheit der Positionierung der Vorformlinge an der Innenmantelfläche des Hüllrohres wird weiter verbessert, indem die Hüllrohr-Innenseite und/oder die Hüllrohr-Außenseite und/oder die ARE-Außenrohr-Innenseite und/oder die ARE-Außenrohr-Außenseite durch spanende Bearbeitung erzeugt wird, insbesondere durch Bohren, Fräsen, Schleifen, Honen und/oder Polieren

Diese Bearbeitungstechniken liefern im Vergleich zu anderen bekannten Umformtechniken unter Einsatz von Hitze und Druck genauere und filigranere Strukturen und sie vermeiden Verunreinigungen der Oberflächen durch Formwerkzeuge, wie beispielsweise Düsen, Pressen oder Schmelzformen.

Die spanende mechanische Bearbeitung umfasst vorzugsweise auch eine Strukturierung der Hüllrohr-Innenseite im Bereich von Soll-Positionen der Antiresonanzelement-Vorformlinge, indem diese mit einer sich in Richtung der Hüllrohr-Längsachse erstreckenden Längsstruktur versehen wird. Diese Längsstruktur umfasst beispielsweise Längsschlitze und/oder Längsrillen in der Hüllrohr-Innenwandung, die parallel zur Hüllrohr-Längsachse verlaufen und die bevorzugt durch Bohren, Sägen, Fräsen Schneiden oder Schleifen erzeugt werden.

Die sich in Richtung der Hüllrohr-Längsachse erstreckende Längsstruktur dient als Positionierungshilfe für die Antiresonanzelement-Vorformlinge. Sie erleichtert, dass die Antiresonanzelement-Vorformlinge vorgegebene definierte Positionen an der Innenseite des Hüllrohres einnehmen.

Die Genauigkeit der Positionierung der Vorformlinge an der Innenmantelfläche des Hüllrohres wird verbessert, wenn die oberen stirnseitigen Enden der Strukturelemente mittels einer Positionierungsschablone an der Soll-Position positioniert werden.

Die Positionierungsschablone weist beispielsweise einen in die Hüllrohr-Innenbohrung ragenden Schaft auf, der mit Halteelementen in Form mehrerer radial nach außen weisender Haltearme versehen ist.

Die konstruktiv vorgegebene sternförmige Anordnung der Halteelemente erleichtert die exakte Positionierung der Antiresonanzelement-Vorformlinge an den jeweiligen Soll-Positionen und deren Fixierung, beispielsweise mittels der ober erläuterten Versiegelungs- oder Verbindungsmasse. Dabei wird die Positionierungsschablone vorzugsweise ausschließlich im Bereich der Hüllrohr-Stirnseiten eingesetzt, vorzugsweise im Bereich beider Hüllrohr-Stirnseiten.

Es hat sich außerdem eine Verfahrensweise bewährt, bei der beim Elongieren der primären Vorform gemäß Verfahrensschritt (d) und/oder beim Ziehen der Hohlkernfaser gemäß Verfahrensschritt (e) mehrere Bestandteile der Vorform aus Quarzglas gemeinsam erhitzt und erweicht werden, wobei das Quarzglas mindestens einiger der Vorform-Bestandteile mindestens einen Dotierstoff enthält, der die Viskosität von Quarzglas absenkt.

Bestandteile der primären Vorform umfassen das Hüllrohr und die darin angeordneten Antiresonanzelement-Vorformlinge. Die sekundäre Vorform enthält zusätzliches Mantelmaterial, das beispielsweise in Form eines Überfangzylinders oder mehrerer Überfangzylinder bereitgestellt und auf die primäre Vorform aufkollabiert oder mit dieser zusammen zu der Hohlkernfaser verzogen wird.

Als die Viskosität von Quarzglas absenkende Dotierstoffe kommen vorzugsweise Fluor, Chlor und/oder Hydroxylgruppen zum Einsatz.

Die Dotierung ermöglich die Anpassung der thermischen Ausdehnungskoeffizienten von benachbarten Vorform-Bestandteilen, um Spannungen zu vermeiden oder zu vermindern. Sie kann auch dazu eingesetzt werden, die thermische Stabilität eines Vorform-Bestandteils zu Gunsten der Stabilität eines benachbarten Vorform-Bestandteils zu verringern.

So hat es sich beispielsweise als günstig erwiesen, wenn das Quarzglas des Hüllrohres bei einer Messtemperatur von 1250 °C eine um mindestens 0,5 dPa.s höhere Viskosität, vorzugsweise eine um mindestens 0,6 dPa.s, höhere Viskosität, aufweist als das Quarzglas von zusätzlich aufgebrachtem Mantelmaterial (bei Angabe der Viskosität als logarithmischer Wert in dPas).

Insbesondere im Hinblick auf eine geringe optische Dämpfung und eine große optische Übertragungs-Bandbreite der Hohlkernfaser hat es sich als besonders vorteilhaft erwiesen, wenn die Antiresonanzelemente um den Hohlkern mit einer ungeradzahligen Symmetrie angeordnet sind.

Hinsichtlich der Herstellung der Vorform für die Hohlkernfaser wird die oben angegebene technische Aufgabe ausgehend von einem Verfahren der eingangs genannten Gattung erfindungsgemäß dadurch gelöst, dass zum Bereitstellen der rohrförmigen Antiresonanzelement-Vorformlinge gemäß Verfahrensschritt (b) das ARE-Außenrohr und/oder das ARE-Innenrohr anhand eines Vertikalziehverfahrens ohne Formwerkzeug erzeugt wird, das folgende Verfahrensschritte umfasst:
(aa) Bereitstellen eines Ausgangshohlzylinders aus Glas, der eine ZylinderLängsachse und eine äußere Zylindermantelfläche sowie eine innere Zylindermantelfläche aufweist,
(bb) einen ersten Elongierprozess, bei dem der Ausgangshohlzylinder mit vertikal orientierter Längsachse kontinuierlich einer ersten Heizzone mit einer ersten Heizzonenlänge L_{H1} zugeführt, darin bereichsweise erweicht und aus dem erweichten Bereich ein Zwischenzylinder ohne Formwerkzeug abgezogen wird,
(cc) einen zweiten Elongierprozess, bei dem der Zwischenzylinder oder ein aus dem Zwischenzylinder durch Elongieren erhaltener elongierter Zwischenzylinder mit vertikal orientierter Längsachse kontinuierlich einer zweiten Heizzone mit einer zweiten Heizzonenlänge L_{H2} zugeführt, darin bereichsweise erweicht und aus dem erweichten Bereich ein Rohrstrang mit einem Außendurchmesser Tₐ und einem Innendurchmesser Ti ohne Formwerkzeug abgezogen wird, wobei gilt: L_{H2} < L_{H1} und Tₐ/Tᵢ < 1,5, und
(dd) Ablängen des Rohrstrangs zu ARE-Außenrohren beziehungsweise zu ARE-Innenrohren,
wobei als Heizzonenlänge derjenige Längenabschnitt verstanden wird, innerhalb dem die in Grad Celsius gemessene Temperatur mindestens 90% einer maximalen Ziehtemperatur beträgt.

Diese Verfahrensweise ermöglicht eine präzisere Fertigung der Hohlkernfaser. Maßnahmen zur Herstellung der Vorform sind weiter oben im Zusammenhang der Herstellung der Hohlkernfaser erläutert und diese Erläuterungen werden hiermit einbezogen.

### Definitionen

Einzelne Verfahrensschritte und Begriffe der obigen Beschreibung werden im Folgenden ergänzend definiert. Die Definitionen sind Bestandteil der Beschreibung der Erfindung. Bei einem sachlichen Widerspruch zwischen einer der folgenden Definitionen und der übrigen Beschreibung ist das in der Beschreibung Gesagte maßgeblich.

### Antiresonanzelemente

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem SiO₂, einem Kunststoff, insbesondere aus einem Polymer, aus einem Verbundwerkstoff oder aus kristallinem Material.

### Antiresonanzelement-Vorformling / Antiresonanzelement-Vorstufe

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Als Antiresonanzelement-Vorstufen werden Bauteile oder Bestandteile der Vorform bezeichnet, die erst durch Umformung zu Antiresonanzelement-Vorformlingen oder direkt können einfache oder verschachtelte Bauteile sein, an denen zusätzlich Positionierhilfen fixiert sein können. Sie liegen ursprünglich in der primären Vorform (Cane) vor.

Durch Weiterverarbeitung der primären Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen. Die veränderte Form wird hier ebenfalls als Antiresonanzelement-Vorformling oder auch als Antiresonanzelement-Vorstufe bezeichnet.

### Vorform / primäre Vorform / sekundäre Vorform

Die Vorform ist dasjenige Bauteil, aus dem die Antiresonante Hohlkernfaser gezogen wird. Es ist eine primäre Vorform oder eine durch Weiterverarbeitung der primären Vorform erzeugte sekundäre Vorform. Die Weiterverarbeitung der primären Vorform zu einer sekundären Vorform, aus der die Hohlkernfaser gezogen wird, kann eine einmalige oder wiederholte Durchführung von einem oder mehreren der folgenden Heißformprozesse umfassen:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren.

### Elongieren / Kollabieren

Beim Elongieren wird die primäre Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden.

Beim Kollabieren wird eine Innenbohrung verengt oder Ringspalte zwischen rohrförmigen Bauteil werden geschlossen oder verengt. Das Kollabieren geht in der Regel mit einem Elongieren einher.

### Hohlkern / Innerer Mantelbereich / Äußerer Mantelbereich / Cane

Das Ensemble aus mindestens einem Hüllrohr und darin lose aufgenommenen oder fest fixierten Vorformlingen oder Vorstufen für Antiresonanzelemente wird hier auch als "primäre Vorform" oder "Cane" bezeichnet. Die primäre Vorform (Cane) umfasst den Hohlkern und einen Mantelbereich. Dieser Mantelbereich wird auch als "innerer Mantelbereich" bezeichnet, wenn es auch einen "äußeren Mantelbereich" gibt, der beispielsweise durch Aufkollabieren auf den Cane erzeugt worden ist, und wenn zwischen diesen Mantelbereichen unterschieden werden soll. Die Bezeichnungen "innerer Mantelbereich" und "äußerer Mantelbereich" werden auch für die entsprechenden Bereiche in der Hohlkernfaser oder in Zwischenprodukten genutzt, die durch Weiterverarbeitung der primären Vorform erhalten werden.

Die Bezeichnung "Rohrinnenseite" wird auch als Synonym für "Rohr-Innenmantelfläche" und die Bezeichnung "Rohraußenseite" wird auch als Synonym für "Rohr-Außenmantelfäche" verwendet. Der Begriff "Innenbohrung" in Verbindung mit einem Rohr besagt nicht, dass die Innenbohrung durch einen Bohrvorgang erzeugt worden ist.

### Spanende Bearbeitung

Darunter werden trennende mechanische Fertigungsverfahren zur trennenden Bearbeitung eines Werkstücks verstanden, insbesondere Drehen, Schneiden, Bohren, Sägen, Fräsen und Schleifen. Durch diese Bearbeitung wird eine sich in Richtung der Hüllrohr-Längsachse erstreckende Längsstruktur geschaffen, die als Positionierungshilfe für die Antiresonanzelement-Vorformlinge dient. Die Längsstruktur ist von der Hüllrohr-Innenmantelfläche zugänglich; sie kann sich auch bis zur Außenmantelfläche durch die gesamte Hüllrohr-Wandung erstrecken.

### Teilchengröße und Teilchenqrößenverteilunq

Teilchengröße und Teilchengrößenverteilung der SiO₂-Partikel werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Die Teilchengrößenverteilungen werden häufig anhand der jeweiligen D₁₀-, D₅₀- und D₉₀-Werte charakterisiert. Dabei kennzeichnet der D₁₀-Wert diejenige Teilchengröße, die von 10% des kumulativen Volumens der SiO₂-Teilchen nicht erreicht wird, und dementsprechend der D₅₀-Wert und der D₉₀-Wert diejenige Partikelgrößen, die von 50% beziehungsweise von 90% des kumulativen Volumens der SiO₂-Partikel nicht erreicht wird. Die Partikelgrößenverteilung wird durch Streulicht- und Laserbeugungsspektroskopie nach ISO 13320 ermittelt.

### Ausführungsbeispiel

Nachfolgend wird die Erfindung anhand eines Ausführungsbeispiels und einer Zeichnung näher erläutert. Dabei zeigt in schematischer Darstellung
- **Figur 1**: eine primäre Vorform mit einem Hüllrohr und darin positionierten und fixierten Antiresonanzelement-Vorformlingen zur Herstellung einer Vorform für eine Hohlkernfaser anhand einer Ansicht auf den radialen Querschnitt, und
- **Figur 2**: eine Vorrichtung zum Einsatz bei der werkzeugfeien Fertigung von ARE-Außenrohren und ARE-Innenrohren anhand eines Vertikalziehverfahrens.

Bei der Herstellung der Hohlkernfaser beziehungsweise der Vorform für die Hohlkernfaser sind eine Vielzahl von Bauteilen miteinander zu verbinden. Darüber hinaus kann es bei der Durchführung von Heißformprozessen hilfreich sein, vorhandene Spalte oder Kanäle der Vorform zu versiegeln. Zum Verbinden beziehungsweise zur Versiegelung wird eine auf SiO₂ basierende Versiegelungs- oder Verbindungsmasse eingesetzt, wie sie aus der DE 10 2004 054 392 A1 bekannt ist. Dabei wird durch Nassvermahlen von Quarzglaskörnung ein wässriger Schlicker erzeugt, der amorphe SiO₂-Partikel mit einer Partikelgrößenverteilung enthält, die durch einen D₅₀-Wert von etwa 5 µm und durch einen D₉₀-Wert von etwa 23 µm gekennzeichnet ist. Dem Basisschlicker wird weitere amorphe SiO₂-Körnung mit einer mittleren Korngröße von etwa 5 µm zugemischt. Der als Verbindungsmasse eingesetzte Schlicker hat einen Feststoffgehalt von 90%, der zu mindestens 99,9 Gew.-% aus SiO₂ besteht.

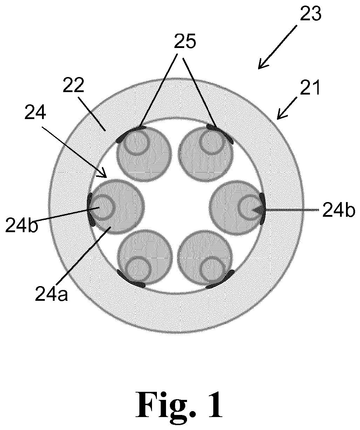

**Figur 1** zeigt schematisch einen Cane (primäre Vorform 23) mit einem Hüllrohr 21 mit einer Hüllrohr-Wandung 22, an deren Innenmantelfläche an zuvor definierten azimutalen Positionen im gleichmäßigen Abstand Antiresonanzelement-Vorformlinge 24 fixiert sind; im Ausführungsbeispiel sind es sechs Vorformlinge 24, in einer anderen, nicht dargestellten bevorzugten Ausführungsform ist es eine ungeradzahlige Anzahl von Vorformlingen.

Das Hüllrohr 21 besteht aus Quarzglas und hat eine Länge von 1000 mm, einen Außendurchmesser von 27 mm und einen Innendurchmesser von 20 mm. Die Antiresonanzelement-Vorformlinge 24 liegen als Ensemble miteinander verschachtelter Strukturelemente aus einem ARE-Außenrohr 24a und eines ARE-Innenrohres 24b vor. Das ARE-Außenrohr 24a hat einen Außendurchmesser von 6,2 mm und das ARE-Innenrohr 24b hat einen Außendurchmesser von 2,5 mm. Die Wandstärke beider Strukturelemente (24a; 24b) ist gleich und beträgt 0,3 mm. Das Durchmesserverhältnis beträgt beim ARE-Außenrohr somit 1,107 und beim ARE-Innenrohr beträgt es 1,315. Die Längen von ARE-Außenrohr 24a und ARE-Innenrohr 24b entsprechen der Hüllrohr-Länge.

Die Fixierung der Antiresonanzelement-Vorformlinge 24 an der Innenwand des Hüllrohrs 21 erfolgt mittels der auf SiO₂ basierenden Verbindungsmasse 25.

Die Verbindungsmasse 25 wird auf der Hüllrohr-Innenmantelfläche lokal im Bereich der stirnseitigen Enden aufgetragen und die Antiresonanzelement-Vorformlinge werden darauf unter Einsatz einer Positionierungs-Schablone mit konstruktiv vorgegebener sternförmiger Anordnung von Haltearmen für die einzelnen Antiresonanzelement-Vorformlinge 24 aufgesetzt. Die Positionierungs-Schablone ist dabei auf den Bereich um die beiden stirnseitigen Hüllrohr-Enden beschränkt.

Durch diese Methode wird eine genaue und reproduzierbare Verbindung zwischen Hüllrohr 21 und Antiresonanzelement-Vorformlingen 24 geschaffen. Zur Fixierung genügt eine Verfestigung der Verbindungsmasse 25 bei niedriger Temperatur, so dass eine starke Erwärmung der umliegenden Bereiche und somit eine Verformung Antiresonanzelement-Vorformlinge 24 vermieden wird.

Die zum Trocknen erforderliche Temperatur liegt unterhalb von 300 °C, was die Einhaltung der Maßhaltigkeit der Vorform begünstigt und thermische Beeinträchtigungen vermeidet. Ein Erhitzen auf höhere Temperaturen um 800 °C, beispielsweise beim Elongieren der Vorform zur Hohlkernfaser, führt zu einer weiteren thermischen Verfestigung der Versiegelungs- oder Verbindungsmasse, die auch geeignet ist, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen vollständig verdichtet und durch Erhitzen beim Heißformprozess verglast werden. Dabei verhält sich die Versiegelungs- oder Verbindungsmasse wie Quarzglas; sie wird viskos und verformbar.

Die primäre Vorform 23 wird mit einem Überfangzylinder aus Quarzglas überfangen, wobei der Überfangzylinder auf das Hüllrohr 1 aufkollabiert und gleichzeitig wird das Rohr-Ensemble zu einer sekundären Vorform elongiert. Der Überfangzylinder hat einen Außendurchmesser von 63,4 mm und eine Wandstärke von 17 mm.

Beim Kollabier- und Elongierprozess wird die koaxiale Anordnung von Hüllrohr 1 und Überfangzylinder bei vertikal orientierter Längsachse von unten kommend einer temperaturgeregelten Heizzone zugeführt und darin mit dem oberen Ende der Anordnung beginnend zonenweise erweicht.

Die Heizzone wird auf eine Soll-Temperatur von 1600 °C mit einer Regelgenauigkeit von +/- 0.1°C gehalten. Dadurch können Temperaturschwankungen im Heißformprozess auf weniger als +/- 0.5°C begrenzt werden.

Die im Kollabier- und Elongierprozess gebildete sekundäre Vorform hat einen Außendurchmesser von etwa 50 mm und eine aus äußerem Mantel und innerem Mantel zusammengesetzte Mantel-Wanddicke von 16,6 mm. Die maximale Wanddickenschwankung (größter Wert minus kleinster Wert) der Antiresonanzelement-Vorformlinge beträgt weniger als 4 µm. Die sekundäre Vorform wird anschließend zu der Antiresonanten Hohlkernfaser gezogen.

Die nachfolgende Tabelle nennt die Abzugsparameter bei unterschiedlichen Außendurchmessern vor (VOR) und nach (NACH) dem Umformprozess.

**Tabelle 1**

| **Außendurchmesser VOR [mm]** | **Außendurchmesser NACH [mm]** | **Hüllrohrlänge [mm]** | **Vorschubgeschwindigkeit [mm/min]** | **Abzug [mm/min]** |
|---|---|---|---|---|
| 90 | 70 | 1000 | 15 | 9,80 |
| 80 | 70 | 1000 | 15 | 4,59 |
| 40 | 20 | 1000 | 5 | 15 |
| 25 | 20 | 1000 | 10 | 5,63 |

Die Heizzone hat eine Länge von 100 mm. Beispielsweise ergibt ein Hüllrohr mit einem Außendurchmesser von 90 mm und einer Wandstärke von 10 mm bei einer Zufuhrgeschwindigkeit von 5 mm/min einen Durchsatz von 27,6 g/min in die Heizzone, bei einer Zufuhrgeschwindigkeit von 15 mm/min liegt der Durchsatz bei 83 g/min. Bei einer Zufuhrgeschwindigkeit 15 mm/min ergibt sich bei einem Rohr mit einem Außendurchmesser von 25 mm und 1 mm Wandstärke ein Durchsatze von 2,49 g/min.

Die maximale Abweichung der Wanddicke der Antiresonanzelement-Vorformlinge in der Vorform beträgt bei allen Ausführungsbeispielen etwa 4 µm. Aus den Vorformen wurden Hohlkernfasern mit einem Außendurchmesser von 200 µm beziehungsweise 230 mm gezogen, und die Wanddicken der Antiresonanzelemente wurden bestimmt.

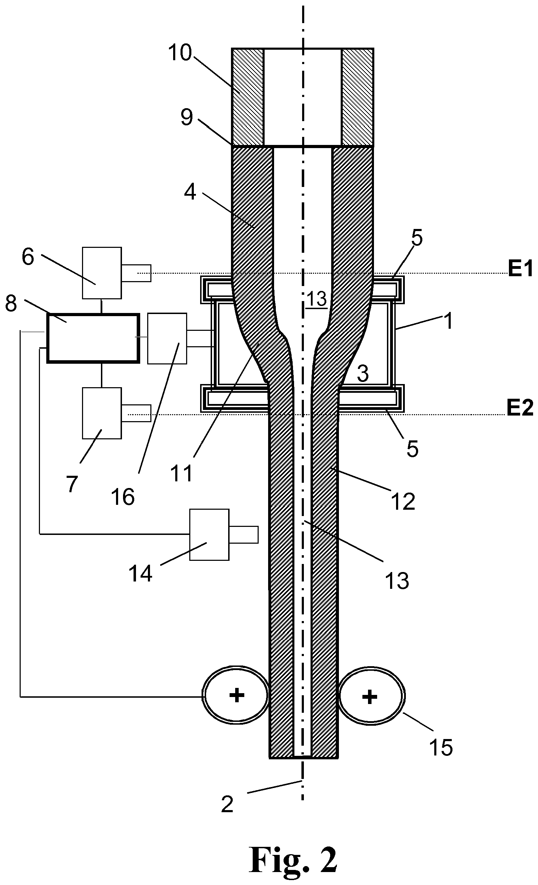

Die in **Figur 2** gezeigte Vorrichtung dient zum werkzeugfreien Elongieren eines Ausgangszylinders 4 aus undotiertem Quarzglas zu einem Zwischenzylinder.

Die Außenwandung des Ausgangszylinders wird mittels Umfangsschleifers, der mit einem #80 Schleifstein bestückt ist, grob geschliffen, wodurch der vorgegebene Soll-Außendurchmesser im Wesentlichen erhalten wird. Die Außenmantelfläche wird dann mittels eines NC-Umfangsschleifers fein geschliffen. Die Innenmantelfläche des so erhaltenen Rohres wird insgesamt mittels einer Honmaschine, die mit einer #80 Honleiste bestückt ist gehont, wobei der Glättungsgrad fortlaufend verfeinert wird, und die Endbehandlung mit einer #800 Honleiste erfolgt. Anschließend wird der Ausgangszylinder in einer 30%igen Flusssäure-Ätzlösung kurz geätzt. Auf diese Weise wird ein Ausgangszylinder mit einem Außendurchmesser von 200 mm und einem Innendurchmesser von 70 mm gefertigt. Dieser wird anschließend einem Vertikalziehverfahren in einer Vorrichtung gemäß Figur 2 zu einem Zwischenzylinder elongiert.

Die Vorrichtung umfasst einen vertikal orientierten Widerstands-Heizofen 1, der einen im Querschnitt kreisförmigen Heizraum 3 umschließt. Das Heizrohr 1 besteht aus einem ringförmigen Element mit einem Innendurchmesser von 240 mm, einem Außendurchmesser von 260 mm und einer Länge von 200 mm. Das Grafit-Heizrohr 1 umschließt die eigentliche Heizzone. Es ist beiderseits mittels 55 mm breiten Verlängerungsstücken 5 aus Grafitrohr verlängert, die einen Innendurchmesser von 250 mm und einen Außendurchmesser von 280 mm haben. Das Innenvolumen der Heizzone Vc beträgt etwa 8140 mm³

In Höhe einer oberen Erfassungsebene E1 (an der Oberkante des oberen Verlängerungsstücks 5) ist ein Pyrometer 6 angeordnet, welches die Oberflächentemperatur des Ausgangszylinders 1 erfasst. In Höhe einer unteren Erfassungsebene E2 (an der Unterkante des unteren Verlängerungsstücks 5) ist ein weiteres Pyrometer 7 angeordnet, welches die Oberflächentemperatur des elongierten Rohrstrangs 12 erfasst. Die Temperatur-Messwerte der Pyrometer 6 und 7 sowie die vom Pyrometer 16 gemessene Temperatur des Heizrohres 1 werden jeweils einem Rechner 8 zugeführt.

Das obere Ende des Ausgangszylinders 4 ist über eine Schweißverbindung 9 mit einem Quarzglas-Halterohr 10 verbunden, mittels dem es in horizontaler und vertikaler Richtung verschiebbar ist.

Der Ausgangszylinder 4 wird so ausgerichtet, dass seine Längsachse möglichst koaxial zur Mittelachse 2 des Heizrohres 1 verläuft. Er wird dem Heizraum 3 (mit seinem untern Ende beginnend) mit einer konstanten Vorschubgeschwindigkeit von oben zugeführt und darin erweicht. Aus dem erweichten Bereich wird unter Bildung einer Ziehzwiebel 11 ein Zwischenzylinder-Rohrstrang 12 vertikal nach unten abgezogen. Der Zwischenzylinder-Rohrstrang 12 wird dabei entlang eines Wanddickenmessgerät 14 geleitet, das ebenfalls mit dem Rechner 8 verbunden ist, so dass während des Ziehprozesses die Wanddicke des abgezogenen Rohrstrangs 12 aufgezeichnet und mit Hilfe des Rechners 8 ausgewertet werden kann. Die durchgehende Innenbohrung von Ausgangszylinder 4 und Zwischenzylinder-Rohrstrang 12 trägt die Bezugsziffer 13. Die Rohrabzugsgeschwindigkeit wird mittels eines Abzugs 15 erfasst und über den Rechner 8 eingestellt.

In dem vertikal ausgerichteten Heizrohr 1 wird ein Quarzglas-Hohlzylinder 4 mit einem Außendurchmesser von 200 mm und einem Innendurchmesser von 75 mm so justiert, dass seine Längsachse koaxial zu Mittelachse 2 des Heizrohres 1 verläuft. Der Ausgangszylinder 4 wird in der Heizzone auf eine Temperatur oberhalb von 2.200 °C erhitzt und mit einem vorgegebenen Vorschub abgelassen. Aus der sich bildenden Ziehzwiebel 11 wird der Quarzglas-Rohrstrang 12 mit geregelter Ziehgeschwindigkeit auf einen nominalen Außendurchmesser von 40 mm und einen Innendurchmesser von 30 mm (Wanddicke: 5 mm) als Zwischenzylinder abgezogen. Dieser zeigt eine glatte geschmolzene und partikelfreie Oberfläche. Er wird in einem zweiten Elongierschritt in einer zweiten Ziehanlage als Ausgangszylinder für die Herstellung von ARE-Außenrohren beziehungsweise ARE-Innenrohren eingesetzt. Die dafür eingesetzte zweite Ziehanlage gleicht der von Figur 2, sie unterscheidet sich im Wesentlich durch die Länge und den Innendurchmesser der ihrer Heizzone. Die Heizzone (das Heizrohr) hat einen Innendurchmesser von 120 mm, einem Außendurchmesser von 140 mm und eine Länge von 100 mm.

## Patentansprüche

1. Verfahren zur Herstellung einer Antiresonanten Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (21) mit einer Hüllrohr-Längsachse, entlang der sich eine von einer Innenseite und einer Außenseite begrenzte Hüllrohr-Wandung (22) erstreckt,
(b) Bereitstellen von rohrförmigen Antiresonanzelement-Vorformlingen (24), die jeweils mindestens ein ARE-Außenrohr (24a) und optional mindestens ein ARE-Innenrohr (24b) aufweisen,
(c) Anordnen der Antiresonanzelement-Vorformlingen (24) an Soll-Positionen der Innenseite der Hüllrohr-Wandung (22) unter Bildung einer primären Vorform (23), die einen hohlen Kernbereich und einen inneren Mantelbereich aufweist, und
(d) Elongieren der primären Vorform (23) zu der Hohlkernfaser oder Weiterverarbeitung der primären Vorform (23) zu einer sekundären Vorform, aus der die Hohlkernfaser gezogen wird, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** zum Bereitstellen der rohrförmigen Antiresonanzelement-Vorformlinge gemäß Verfahrensschritt (b) das ARE-Außenrohr (24a) und/oder das ARE-Innenrohr (24b) anhand eines Vertikalziehverfahrens ohne Formwerkzeug erzeugt wird das folgende Verfahrensschritte umfasst:
(aa) Bereitstellen eines Ausgangshohlzylinders (4) aus Glas, der eine Zylinder-Längsachse (2) und eine äußere Zylindermantelfläche sowie eine innere Zylindermantelfläche aufweist,
(bb) einen ersten Elongierprozess, bei dem der Ausgangshohlzylinder (4) mit vertikal orientierter Längsachse (2) kontinuierlich einer ersten Heizzone (3) mit einer ersten Heizzonenlänge L_{H1} zugeführt, darin bereichsweise erweicht und aus dem erweichten Bereich ein Zwischenzylinder (12) ohne Formwerkzeug abgezogen wird,
(cc) einen zweiten Elongierprozess, bei dem der Zwischenzylinder (12) oder ein aus dem Zwischenzylinder (12) durch Elongieren erhaltener elongierter Zwischenzylinder mit vertikal orientierter Längsachse kontinuierlich einer zweiten Heizzone mit einer zweiten Heizzonenlänge L_{H2} zugeführt, darin bereichsweise erweicht und aus dem erweichten Bereich ein Rohrstrang mit einem Außendurchmesser Tₐ und einem Innendurchmesser Ti ohne Formwerkzeug abgezogen wird, wobei gilt: L_{H2} < L_{H1} und Tₐ/Tᵢ < 1,5, und
(dd) Ablängen des Rohrstrangs zu ARE-Außenrohren (24a) beziehungsweise zu ARE-Innenrohren (24b),
wobei als Heizzonenlänge derjenige Längenabschnitt verstanden wird, innerhalb dem die in Grad Celsius gemessene Temperatur mindestens 90% einer maximalen Ziehtemperatur beträgt.

2. Verfahren nach Anspruch 1, **dadurch gekennzeichnet, dass** das Bereitstellen des Ausgangshohlzylinders (4) gemäß Verfahrensschritt (aa) eine mechanische Bearbeitung der Zylindermantelflächen zur Einstellung von Ausgangshohlzylinder-Endmaßen, umfassend einen Außendurchmesser Cₐ von mindestens 90 mm, einen Innendurchmesser Ci und ein Durchmesserverhältnis Cₐ/Cᵢ von weniger als 2,8.

3. Verfahren nach Anspruch 2, **dadurch gekennzeichnet, dass** die mechanische Bearbeitung der Zylindermantelflächen des Ausgangshohlzylinders (4) durch Schneiden, Fräsen, Bohren, Schleifen, Honen und/oder Polieren erfolgt.

4. Verfahren nach Anspruch 2 oder 3, **dadurch gekennzeichnet, dass** der Außendurchmesser Cₐ auf mindestens 150 mm, vorzugsweise mindestens 180 mm eingestellt wird.

5. Verfahren nach einem der Ansprüche 1 bis 4, **dadurch gekennzeichnet, dass** der Rohrstrang mit einem Außendurchmesser Tₐ im Bereich von 7 bis 35 mm gezogen wird.

6. Verfahren nach einem der Ansprüche 1 bis 5, **dadurch gekennzeichnet, dass** die erste Heizzonenlänge L_{H1} mindestens 200 mm, und vorzugsweise zwischen 150 und 400 mm beträgt, und dass die zweite Heizzonenlänge L_{H2} maximal 140 mm, und vorzugsweise zwischen 50 und 140 mm beträgt.

7. Verfahren nach einem der Ansprüche 1 bis 6, **dadurch gekennzeichnet, dass** die Wandstärke des Rohrstrangs auf einen Wert zwischen 0,2 und 2 mm, bevorzugt auf einen Wert zwischen 0,22 und 1,2 mm, eingestellt wird, und dass das Durchmesserverhältnis Tₐ/Tᵢ auf einen Wert im Bereich von 1,02 und 1,14, vorzugsweise auf einen Wert im Bereich von 1,04 bis 1,08 eingestellt wird.

8. Verfahren nach einem der Ansprüche 1 bis 6, **dadurch gekennzeichnet, dass** die Wandstärke des Rohrstrangs auf einen Wert zwischen 0,2 und 2 mm, bevorzugt auf einen Wert zwischen 0,22 und 1,2 mm, eingestellt wird, und dass das Durchmesserverhältnis Tₐ/Tᵢ auf einen Wert im Bereich von 1,05 und 1,5, vorzugsweise auf einen Wert im Bereich von 1,14 bis 1,35 eingestellt wird.

9. Verfahren nach einem der Ansprüche 1 bis 8, **dadurch gekennzeichnet, dass** das Ausziehverhältnis in Summe der Elongierprozesse auf einen Wert im Bereich von 38 bis 78 eingestellt wird.

10. Verfahren nach einem der vorhergehenden Ansprüche, **dadurch gekennzeichnet, dass** das ARE-Außenrohr (24a) beziehungsweise das ARE-Innenrohr (24b) eine Außenmantelfläche aufweist und dass nach Beendigung des Vertikalziehverfahrens die Außenmantelfläche frei ist von Partikeln mit einer Größe von mehr als 0,005 mm, und dass das ARE-Außenrohr (24a) beziehungsweise das ARE-Innenrohr (24b) aus Quarzglas besteht, das eine Wolfram-Konzentration von weniger als 2 Gew.-ppb enthält.

11. Verfahren zur Herstellung einer Vorform für eine Antiresonante Hohlkernfaser, die einen sich entlang einer Faser-Längsachse erstreckenden Hohlkern und einen den Hohlkern umgebenden inneren Mantelbereich aufweist, der mehrere Antiresonanzelemente umfasst, mit den Verfahrensschritten:
(a) Bereitstellen eines Hüllrohres (21) mit einer Hüllrohr-Längsachse, entlang der sich eine von einer Innenseite und einer Außenseite begrenzte Hüllrohr-Wandung (22) erstreckt,
(b) Bereitstellen von rohrförmigen Antiresonanzelement-Vorformlingen (24), die jeweils mindestens ein ARE-Außenrohr und optional mindestens ein ARE-Innenrohr aufweisen,
(c) Anordnen der Antiresonanzelement-Vorformlinge (24) an Soll-Positionen der Innenseite der Hüllrohr-Wandung (22) unter Bildung einer primären Vorform (23), die einen hohlen Kernbereich und einen inneren Mantelbereich aufweist, und
(d) Optionale Weiterverarbeitung der primären Vorform (23) zu einer sekundären Vorform für die Hohlkernfaser, wobei die Weiterverarbeitung eine einmalige oder wiederholte Durchführung von einem oder mehreren der folgenden Heißformprozesse umfasst:
(i) Elongieren,
(ii) Kollabieren,
(iii) Kollabieren und gleichzeitiges Elongieren,
(iv) Aufkollabieren von zusätzlichem Mantelmaterial,
(v) Aufkollabieren von zusätzlichem Mantelmaterial und anschließendes Elongieren,
(vi) Aufkollabieren von zusätzlichem Mantelmaterial und gleichzeitiges Elongieren,
**dadurch gekennzeichnet, dass** Antiresonanzelement-Vorformlinge (24) bereitgestellt werden, die jeweils mindestens ein ARE-Außenrohr (24a) und optional mindestens ein ARE-Innenrohr (24b) aufweisen, wobei das ARE-Außenrohr (24a) und/oder das ARE-Innenrohr (24b) anhand eines Vertikalziehverfahrens ohne Formwerkzeug erzeugt wird, das folgende Verfahrensschritte umfasst:
(aa) Bereitstellen eines Ausgangshohlzylinders (4) aus Glas, der eine Zylinder-Längsachse (2) und eine äußere Zylindermantelfläche sowie eine innere Zylindermantelfläche aufweist,
(bb) einen ersten Elongierprozess, bei dem der Ausgangshohlzylinder (4) mit vertikal orientierter Längsachse (2) kontinuierlich einer ersten Heizzone (3) mit einer ersten Heizzonenlänge L_{H1} zugeführt, darin bereichsweise erweicht und aus dem erweichten Bereich ein Zwischenzylinder (12) ohne Formwerkzeug abgezogen wird,
(cc) einen zweiten Elongierprozess, bei dem der Zwischenzylinder (12) oder ein aus dem Zwischenzylinder (12) durch Elongieren erhaltener elongierter Zwischenzylinder mit vertikal orientierter Längsachse kontinuierlich einer zweiten Heizzone mit einer zweiten Heizzonenlänge L_{H2} zugeführt, darin bereichsweise erweicht und aus dem erweichten Bereich ein Rohrstrang mit einem Außendurchmesser Tₐ und einem Innendurchmesser Ti ohne Formwerkzeug abgezogen wird, wobei gilt: L_{H2} < L_{H1} und Tₐ/Tᵢ < 1,5, und
(dd) Ablängen des Rohrstrangs zu ARE-Außenrohren (24a) beziehungsweise zu ARE-Innenrohren (24b),
wobei als Heizzonenlänge derjenige Längenabschnitt verstanden wird, innerhalb dem die in Grad Celsius gemessene Temperatur mindestens 90% einer maximalen Ziehtemperatur beträgt.

## Claims

1. A method for producing an anti-resonant hollow-core fiber which comprises a hollow core extending along a fiber longitudinal axis and an inner casing region that surrounds the hollow core and comprises a plurality of anti-resonant elements, comprising the method steps of:
(a) providing a cladding tube (21) having a cladding tube longitudinal axis, along which a cladding tube wall (22) extends, which wall is delimited by an inner face and an outer face,
(b) providing tubular anti-resonant element preforms (24), each having at least one ARE outer tube (24a) and optionally at least one ARE inner tube (24b),
(c) arranging the anti-resonant element preforms (24) at desired positions on the inner face of the cladding tube wall (22) to form a primary preform (23), which primary preform comprises a hollow core region and an inner casing region, and
(d) elongating the primary preform (23) to form the hollow-core fiber or further processing the primary preform (23) to form a secondary preform from which the hollow-core fiber is drawn, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** in order to provide the tubular anti-resonant element preforms according to method step (b), the ARE outer tube (24a) and/or the ARE inner tube (24b) is produced using a vertical drawing process without a mold, which comprises the following method steps:
(aa) providing a starting hollow cylinder (4) made of glass, which has a cylinder longitudinal axis (2) and an outer cylinder lateral face and an inner cylinder lateral face,
(bb) a first elongation process, in which the starting hollow cylinder (4) having the vertically oriented longitudinal axis (2) is continuously fed to a first heating zone (3) having a first heating zone length L_{H1}, softened in regions therein, and an intermediate cylinder (12) is withdrawn from the softened region without a mold,
(cc) a second elongation process, in which the intermediate cylinder (12) or an elongated intermediate cylinder obtained from the intermediate cylinder (12) by elongation and having a vertically oriented longitudinal axis is continuously fed to a second heating zone having a second heating zone length L_{H2}, softened in regions therein, and a tube string having an outer diameter Tₐ and an inner diameter Tᵢ is withdrawn from the softened region without a mold, where: L_{H2} < L_{H1} and Tₐ/Tᵢ < 1.5, and
(dd) cutting the tube string to length to form ARE outer tubes (24a) or ARE inner tubes (24b),
the heating zone length being understood to be the length within which the temperature measured in degrees Celsius is at least 90% of a maximum drawing temperature.

2. The method according to claim 1, **characterized in that** the provision of the starting hollow cylinder (4) according to method step (aa) comprises a mechanical machining of the cylinder lateral faces for setting starting hollow cylinder final dimensions, comprising an outer diameter Cₐ of at least 90 mm, an inner diameter Cᵢ and a diameter ratio Cₐ/Cᵢ of less than 2.8.

3. The method according to claim 2, **characterized in that** the mechanical machining of the cylinder lateral faces of the starting hollow cylinder (4) is carried out by cutting, milling, drilling, grinding, honing and/or polishing.

4. The method according to either claim 2 or claim 3, **characterized in that** the outer diameter Cₐ is set to at least 150 mm, preferably at least 180 mm.

5. The method according to any of claims 1 to 4, **characterized in that** the tube string is drawn with an outer diameter Tₐ in the range of 7 to 35 mm.

6. The method according to any of claims 1 to 5, **characterized in that** the first heating zone length L_{H1} is at least 200 mm, and preferably between 150 and 400 mm, and **in that** the second heating zone length L_{H2} is at most 140 mm, and preferably between 50 and 140 mm.

7. The method according to any of claims 1 to 6, **characterized in that** the wall thickness of the tube string is set to a value between 0.2 and 2 mm, preferably to a value between 0.22 and 1.2 mm, and **in that** the diameter ratio Tₐ/Tᵢ is set to a value in the range of 1.02 to 1.14, preferably to a value in the range of 1.04 to 1.08.

8. The method according to any of claims 1 to 6, **characterized in that** the wall thickness of the tube string is set to a value between 0.2 and 2 mm, preferably to a value between 0.22 and 1.2 mm, and **in that** the diameter ratio Tₐ/Tᵢ is set to a value in the range of 1.05 to 1.5, preferably to a value in the range of 1.14 to 1.35.

9. The method according to any of claims 1 to 8, **characterized in that** the drawing ratio in the sum of the elongation process is set to a value in the range of 38 to 78.

10. The method according to any of the preceding claims, **characterized in that** the ARE outer tube (24a) or the ARE inner tube (24b) has an outer lateral face, and **in that** after completion of the vertical drawing process, the outer lateral face is free of particles with a size of more than 0.005 mm, and **in that** the ARE outer tube (24a) or the ARE inner tube (24b) is made of quartz glass containing a tungsten concentration of less than 2 ppb by weight.

11. A method for producing a preform for an anti-resonant hollow-core fiber which comprises a hollow core extending along a longitudinal axis of the fiber and an inner casing region that surrounds the hollow core and comprises a plurality of anti-resonant elements, comprising the method steps of:
(a) providing a cladding tube (21) having a cladding tube longitudinal axis, along which a cladding tube wall (22) extends, which wall is delimited by an inner face and an outer face,
(b) providing tubular anti-resonant element preforms (24), each having at least one ARE outer tube and optionally at least one ARE inner tube,
(c) arranging the anti-resonant element preforms (24) at desired positions on the inner face of the cladding tube wall (22) to form a primary preform (23), which primary preform comprises a hollow core region and an inner casing region, and
(d) optionally further processing the primary preform (23) to form a secondary preform for the hollow-core fiber, the further processing comprising carrying out one or more of the following hot-forming processes once or repeatedly:
(i) elongation,
(ii) collapse,
(iii) collapse and simultaneous elongation,
(iv) collapse of additional casing material,
(v) collapse of additional casing material and subsequent elongation,
(vi) collapse of additional casing material and simultaneous elongation,
**characterized in that** anti-resonant element preforms (24) are provided, each having at least one ARE outer tube (24a) and optionally at least one ARE inner tube (24b), the ARE outer tube (24a) and/or the ARE inner tube (24b) being produced by means of a vertical drawing process without a mold, which comprises the following method steps:
(aa) providing a starting hollow cylinder (4) made of glass, which has a cylinder longitudinal axis (2) and an outer cylinder lateral face and an inner cylinder lateral face,
(bb) a first elongation process, in which the starting hollow cylinder (4) having the vertically oriented longitudinal axis (2) is continuously fed to a first heating zone (3) having a first heating zone length L_{H1}, softened in regions therein, and an intermediate cylinder (12) is withdrawn from the softened region without a mold,
(cc) a second elongation process, in which the intermediate cylinder (12) or an elongated intermediate cylinder obtained from the intermediate cylinder (12) by elongation and having a vertically oriented longitudinal axis is continuously fed to a second heating zone having a second heating zone length L_{H2}, softened in regions therein, and a tube string having an outer diameter Tₐ and an inner diameter Tᵢ is withdrawn from the softened region without a mold, where: L_{H2} < L_{H1} and Tₐ/Tᵢ < 1.5, and
(dd) cutting the tube string to length to form ARE outer tubes (24a) or ARE inner tubes (24b),
the heating zone length being understood to be the length within which the temperature measured in degrees Celsius is at least 90% of a maximum drawing temperature.

## Revendications

1. Procédé pour la fabrication d'une fibre à coeur creux antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir un tuyau de gaine (21) comportant un axe longitudinal de tuyau de gaine le long duquel s'étend une paroi de tuyau de gaine (22) délimitée par une face interne et une face externe,
(b) fournir des préformes d'éléments antirésonance (24) tubulaires qui présentent respectivement au moins un tuyau externe ARE (24a) et éventuellement au moins un tuyau interne ARE (24b),
(c) agencer les préformes d'éléments antirésonance (24) en des positions de consigne de la face interne de la paroi de tuyau de gaine (22) pour former une préforme primaire (23), laquelle présente une région de coeur creux et une région enveloppante interne, et
(d) allonger la préforme primaire (23) en fibre à coeur creux ou traiter ultérieurement la préforme primaire (23) en une préforme secondaire à partir de laquelle la fibre à coeur creux est étirée, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que**, pour la fourniture des préformes d'éléments antirésonance tubulaires selon l'étape de procédé (b), le tuyau externe ARE (24a) et/ou le tuyau interne ARE (24b) sont produits à l'aide d'un procédé d'étirage vertical sans outil de formage qui comprend les étapes de procédé suivantes :
(aa) fourniture d'un cylindre creux de départ (4) en verre qui présente un axe longitudinal (2) de cylindre et une surface enveloppante de cylindre externe ainsi qu'une surface enveloppante de cylindre interne,
(bb) un premier processus d'allongement, lors duquel le cylindre creux de départ (4) comportant un axe longitudinal (2) orienté verticalement est amené en continu à une première zone de chauffage (3) comportant une première longueur de zone de chauffage L_{H1}, y est ramolli dans certaines régions et un cylindre intermédiaire (12) est extrait de la région ramollie sans outil de formage,
(cc) un second processus d'allongement, lors duquel le cylindre intermédiaire (12) ou un cylindre intermédiaire allongé obtenu par allongement à partir du cylindre intermédiaire (12) comportant un axe longitudinal orienté verticalement est amené en continu à une seconde zone de chauffage comportant une seconde longueur de zone de chauffage L_{H2}, y est ramolli dans certaines régions et un tronçon de tuyau comportant un diamètre externe Tₐ et un diamètre interne Tᵢ est extrait de la région ramollie sans outil de formage, dans lequel s'appliquent : L_{H2} < L_{H1} et Tₐ/Tᵢ < 1,5, et
(dd) coupe à longueur du tronçon de tuyau en tuyaux externes ARE (24a) ou en tuyaux internes ARE (24b),
dans lequel on entend par longueur de zone de chauffage la section de longueur à l'intérieur de laquelle la température mesurée en degrés Celsius est d'au moins 90 % d'une température d'étirage maximale.

2. Procédé selon la revendication 1, **caractérisé en ce que** la fourniture du cylindre creux de départ (4) selon l'étape de procédé (aa) un usinage mécanique des surfaces enveloppantes de cylindre pour le réglage des dimensions finales de cylindre creux de départ, comprenant un diamètre externe Cₐ d'au moins 90 mm, un diamètre interne Cᵢ et un rapport de diamètre Cₐ/Cᵢ inférieur à 2,8.

3. Procédé selon la revendication 2, **caractérisé en ce que** l'usinage mécanique des surfaces enveloppantes de cylindre du cylindre creux de départ (4) est effectué par découpage, fraisage, perçage, meulage, rodage et/ou polissage.

4. Procédé selon la revendication 2 ou 3, **caractérisé en ce que** le diamètre externe Cₐ est réglé à au moins 150 mm, de préférence à au moins 180 mm.

5. Procédé selon l'une des revendications 1 à 4, **caractérisé en ce que** le tronçon de tuyau est étiré avec un diamètre externe Tₐ dans la plage allant de 7 à 35 mm.

6. Procédé selon l'une des revendications 1 à 5, **caractérisé en ce que** la première longueur de zone de chauffage L_{H1} est d'au moins 200 mm, et de préférence comprise entre 150 et 400 mm, et **en ce que** la seconde longueur de zone de chauffage L_{H2} est au maximum de 140 mm, et de préférence comprise entre 50 et 140 mm.

7. Procédé selon l'une des revendications 1 à 6, **caractérisé en ce que** l'épaisseur de paroi du tronçon de tuyau est réglée à une valeur comprise entre 0,2 et 2 mm, de préférence à une valeur comprise entre 0,22 et 1,2 mm, et **en ce que** le rapport de diamètres Tₐ/Tᵢ est réglé à une valeur dans la plage allant de 1,02 et 1,14, de préférence à une valeur dans la plage allant de 1,04 à 1,08.

8. Procédé selon l'une des revendications 1 à 6, **caractérisé en ce que** l'épaisseur de paroi du tronçon de tuyau est réglée à une valeur comprise entre 0,2 et 2 mm, de préférence à une valeur comprise entre 0,22 et 1,2 mm, et **en ce que** le rapport de diamètres Tₐ/Tᵢ est réglé à une valeur dans la plage allant de 1,05 et 1,5, de préférence à une valeur dans la plage allant de 1,14 à 1,35.

9. Procédé selon l'une des revendications 1 à 8, **caractérisé en ce que** le rapport d'étirage dans la somme des processus d'allongement est réglé à une valeur dans la plage allant de 38 à 78.

10. Procédé selon l'une des revendications précédentes, **caractérisé en ce que** le tuyau externe ARE (24a) ou le tuyau interne ARE (24b) présente une surface enveloppante externe et **en ce qu'**à la fin du processus d'étirage vertical, la surface enveloppante externe est exempte de particules d'une taille supérieure à 0,005 mm, et **en ce que** le tuyau externe ARE (24a) ou le tuyau interne ARE (24b) est constitué de verre de quartz contenant une concentration de tungstène inférieure à 2 ppb en poids.

11. Procédé pour la fabrication d'une préforme pour une fibre à coeur creux antirésonante qui présente un coeur creux s'étendant le long d'un axe longitudinal de fibre et une région enveloppante interne entourant le coeur creux, laquelle comprend plusieurs éléments antirésonance, comportant les étapes de procédé consistant à :
(a) fournir un tuyau de gaine (21) comportant un axe longitudinal de tuyau de gaine le long duquel s'étend une paroi de tuyau de gaine (22) délimitée par une face interne et une face externe,
(b) fournir des préformes d'éléments antirésonance (24) tubulaires qui présentent respectivement au moins un tuyau externe ARE et éventuellement au moins un tuyau interne ARE,
(c) agencer les préformes d'éléments antirésonance (24) en des positions de consigne de la face interne de la paroi de tuyau de gaine (22) pour former une préforme primaire (23), laquelle présente une région de coeur creux et une région enveloppante interne, et
(d) éventuellement, traiter ultérieurement la préforme primaire (23) en une préforme secondaire pour la fibre à coeur creux, dans lequel le traitement ultérieur comprend une réalisation unique ou répétée d'un ou de plusieurs des procédés de thermoformage suivants :
(i) allongement,
(ii) écrasement,
(iii) écrasement et allongement simultané,
(iv) écrasement de matériau enveloppant supplémentaire,
(v) écrasement de matériau enveloppant supplémentaire et allongement consécutif,
(vi) écrasement de matériau enveloppant supplémentaire et allongement simultané,
**caractérisé en ce que** des préformes d'éléments antirésonance (24) sont fournies, lesquelles présentent respectivement au moins un tuyau externe ARE (24a) et éventuellement au moins un tuyau interne ARE (24b), dans lequel le tuyau externe ARE (24a) et/ou le tuyau interne ARE (24b) sont produits à l'aide d'un procédé d'étirage vertical sans outil de formage qui comprend les étapes de procédé suivantes :
(aa) fourniture d'un cylindre creux de départ (4) en verre qui présente un axe longitudinal (2) de cylindre et une surface enveloppante de cylindre externe ainsi qu'une surface enveloppante de cylindre interne,
(bb) un premier processus d'allongement, lors duquel le cylindre creux de départ (4) comportant un axe longitudinal (2) orienté verticalement est amené en continu à une première zone de chauffage (3) comportant une première longueur de zone de chauffage L_{H1}, y est ramolli dans certaines régions et un cylindre intermédiaire (12) est extrait de la région ramollie sans outil de formage,
(cc) un second processus d'allongement, lors duquel le cylindre intermédiaire (12) ou un cylindre intermédiaire allongé obtenu par allongement à partir du cylindre intermédiaire (12) comportant un axe longitudinal orienté verticalement est amené en continu à une seconde zone de chauffage comportant une seconde longueur de zone de chauffage L_{H2}, y est ramolli dans certaines régions et un tronçon de tuyau comportant un diamètre externe Tₐ et un diamètre interne Tᵢ est extrait de la région ramollie sans outil de formage, dans lequel s'appliquent : L_{H2} < L_{H1} et Tₐ/Tᵢ < 1,5, et
(dd) coupe à longueur du tronçon de tuyau en tuyaux externes ARE (24a) ou en tuyaux internes ARE (24b),
dans lequel on entend par longueur de zone de chauffage la section de longueur à l'intérieur de laquelle la température mesurée en degrés Celsius est d'au moins 90 % d'une température d'étirage maximale.
